(19) Europäisches Patentamt
European Patent Office
Office européen des brevets

(11) **EP 2 112 753 B1**

(12) **EUROPEAN PATENT SPECIFICATION**

(45) Date of publication and mention
of the grant of the patent:
**16.02.2011 Bulletin 2011/07**

(51) Int Cl.:
*H02K 17/02* (2006.01)    *G01P 3/44* (2006.01)
*G01R 23/16* (2006.01)    *G01R 23/20* (2006.01)
*G01R 31/34* (2006.01)

(21) Application number: **08381014.3**

(22) Date of filing: **24.04.2008**

(54) **Method and device for determining the rotor rotation speed of an electric induction motor**

Verfahren und Gerät zur Bestimmung der Rotordrehzahl eines Asynchronmotors

Procédé et dispositif pour la détermination de la vitesse de rotation d'un rotor d'un moteur asynchrone

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**28.10.2009 Bulletin 2009/44**

(73) Proprietor: **Advanced Digital Design, S.A.**
**50018 Zaragoza (ES)**

(72) Inventors:
- **Sanz Molina, Alfredo**
 **50018, ZARAGOZA (ES)**
- **Garcia Ramos, José Ignacio**
 **50018, ZARAGOZA (ES)**
- **Romeral Martinez, José Luis**
 **c/o ADVANCED DIGITAL DESIGN, S.A.**
 **50018, ZARAGOZA (ES)**
- **Garcia Espinosa, Antoni**
 **c/o ADVANCED DIGITAL DESIGN, S.A.**
 **50018, ZARAGOZA (ES)**
- **Ortega Redondo, Juan Antonio**
 **c/o ADVANCED DIGITAL DESIGN, S.A.**
 **50018, ZARAGOZA (ES)**

(74) Representative: **Esteban Perez-Serrano, Maria Isabel**
**UDAPI & Asociados**
**Explanada 8**
**28040 Madrid (ES)**

(56) References cited:
**WO-A-2006/131878    US-A- 4 761 703**
**US-A- 5 739 698     US-A- 5 742 522**

EP 2 112 753 B1

**Description**

## OBJECT OF THE INVENTION

This invention consists of a method and device for determining the rotation speed of the rotor of an asynchronous electric induction motor which makes the use of costly sensors unnecessary.

The device used in this invention does not require disassembly of the motor, fitting of sensors or other steps in order to measure the speed, and therefore the real efficiency of the motor.

## BACKGROUND OF THE INVENTION

In large-sized asynchronous electric induction motors it is important to know the real rotation speed and by extension, the real efficiency provided. In these cases, variation from the parameters provided by the manufacturer on the specification plates can show whether the motor is working according to the design or if problems have occurred that require attention and repair.

While this is not a high priority in small motors, it is in large-scale motors that, as well as the importance of the real efficiency obtained, repairs and maintenance are more frequent. These repairs should only be carried out when necessary and not for purely experimental purposes.

The following parameters are considered as manufacturer's specifications:

- Nominal speed $f_n$,
- Supply main frequency $f_1$,
- Number of pole pairs $p$,
- Nominal mechanical speed $\omega_n$ of the motor,
- Nominal efficiency $\eta_n$,
- Power factor $\cos\theta$,
- Nominal mechanical power $P_n$,
- Linearity constant $K_m$ which relates the supply voltage $U_1$ to the mains frequency $f_1$ according to $U_l = K_m f_1$.

In any case, the relationship between the speed expressed in hertz $f_1$ [Hz], in radians per second $\omega_s$ [rad/s] or in revolutions per minute $n_s$ [rev/min] is one-to-one, as per the following dependency equations:

$$\omega_s = \frac{2\pi f_1}{p} \; ; \; n_s = \frac{60 f_1}{p} \; .$$

Up to now, calculations of parameters such as real rotation speed or real motor efficiency have required the use of sensors connected to the motor. A speed sensor to calculate speed and a torque sensor to measure the mechanical force delivered by the motor at rotation speed while functioning.

These devices are expensive, take up space and must often be inserted in places set aside for devices which are moved by the motor. This is even more problematic when an motor must be opened up to carry out any kind of repair.

This invention avoids the use of these auxiliary devices and only reads the supply current fed to any of the motor's wiring. In practice, data for the current is read and obtained at one of the motor's power mains, and it is these mains that feed the motor's wiring. Therefore in this description, the terms power main or mains and motor wiring are used interchangeably. In both cases, as the motor wiring is powered through the power supply mains, the variables measured have the same values.

Once the real rotor rotation speed of the motor is known, it is possible to determine efficiency through the relationship expressing the quotient between the mechanical energy delivered to the axis and the electrical energy supplied:

$$\eta = \frac{T\omega_{rm}}{\sqrt{3}U_l I_l \cos\theta} = \frac{T\omega_{rm}}{3U_f I_f \cos\theta}$$

where $U_l$ is the supply voltage, $I_l$ is the supply intensity, $U_f$ and $I_f$ are the voltage and the phase current respectively, $T$ axis torque, $\cos\theta$ is the power factor and $\omega_{rm}$ is the rotor rotation speed measured in radians per second. While both

variables, $U_l$, and $I_l$, are known; the torque $T$ should be determined through experiments or work curves $T$-$\omega$ once the rotation speed is known.

There have been varied results obtained from studies on damage to electric motors. These studies analyse the effect of eccentricity on the wiring current, as harmonics are generated which are solely associated with eccentricity, whose amplitude is proportional to the mechanical failure that causes the said harmonic.

Although eccentricity is a defect which is present to a greater extent when, for example, the motor bearings are damaged, the tooling of the parts is not perfect and there is always a degree of misalignment that causes variations in the separations of the air gap, or anisotropy, heterogeneity of the material; all these are always present to a greater or lesser extent.

In the above mentioned studies, the presence of these harmonics is only of importance when damage occurs so the problem may be quantified; while in the case of this invention, their existence is important even if not caused by damage that must be rectified. Moreover, studies on motor damage make use of devices that measure the real rotor speed, as it is this speed that leads us to the exact location of the harmonic to be quantified in amplitude, $f_{ecc}$, associated with the rotor's eccentricity.

This localisation is carried out using the ratio

$$f_{ecc} = f_1\left[1 \pm k\left(\frac{1-s}{p}\right)\right] = \left[f_1 \pm k \cdot f_{rm}\right]$$

where $f_1$ is the motor supply main frequency, $k$ is an integer, s is slip, p the number of pole pairs.

Once all the variables are obtained using the reading devices, the equation is established and allows us to set the frequency with which the harmonics can be located $f_{ecc}$ that are associated with eccentricity.

When it is the real speed $f_{rm}$ that is required and the frequency associated with eccentricity $f_{ecc}$ is also unknown, the previous ratio does not allow us to solve the problem because there are more unknown quantities than equations linking the variables involved, and therefore, until now, the use of sensors has been essential.

Patent application WO2006131878 discloses a device and a method for sensorless measuring a mechanical rotor frequency of a rotor of an asynchronous machine, wherein the rotor ahs a predetermined defect and the asynchronous machine has a fixed number of pairs of poles. The asynchronous machine comprises a currente determination unit for determining a stator currente of the stator, wherein the stator current has a stator frequency. A processing unit forms a stator current spectrum of the stator current. An analyzing unit analyzes the stator current spectrum and determines an inverse peak and a corresponding inverse frequency in the stator current spectrum, wherein the inverse peak is the peak having the second highest amplitude in the stator current spectrum in the frequency range of the stator frequency. A calculation unit calculates a mechanical rotor frequency of the rotor from the sum of the stator frequency divided by the number or paris of poles and the inverse frequency, if the slip of the asynchronous machine is lower than 50%, or from the difference of the stator frequency divided by the number of pairs of poles and the inverse frequency, if the slip is higher than 50%.

Patent US5742522 discloses an invention wherein during a learning stage a motor current signal is monitored, and estimated motor torque is used to transform the current signal into a time-frequency spectra including a plurality of segments representative of good operating modes. A representative parameter and a respective boundary of each segment is estimated. The current signal is monitored during a test stage to obtain test data, and the test data is compared with the representative parameter and the respective boundary of each respective segment to detect the presence of a fault in a motor. Frequencies at which broken bar faults are likely to occur in a motor can be estimated using the estimated motor torque, and a weighting function can highlight such frequencies during estimation of the parameter.; The current signal can be further subdivided into the segments by monitoring sidebands of the frequency components of current spectrum strips of each segment. Estimating the parameter and the boundary of each segment can include calculating a segment mean (the representative parameter) and variance for each frequency component in each respective segment; calculating a modified Mahalanobis distance for each strip of each respective segment; and for each respective segment, using respective modified Mahalanobis distances to calculate a respective radius about a respective segment mean to define the respective boundary.

This invention establishes a method of assessment of real speed $f_{rm}$, and by extension, the real efficiency of the motor $\eta_m$. Equally, this method can be carried out by a device considered as part of the invention.

## DESCRIPTION OF THE INVENTION

A first aspect of the invention consists of a method for determining the rotation speed of rotor in asynchronous electric induction motors. The nominal speed $f_n$ is one of the parameters provided by the manufacturer on the plate (common name for this kind of data in the specifications of a particular motor model); and the supply main frequency $f_1$, can be measured by an out of motor reading.

The method comprises of the following set of stages:

- **First stage I** which in turn comprises of the following sub-stages:

    a) the measurement of intensity $I_i=I_i(t)$ of any of the wiring phases of the coil of the motor's stator,
    b) the transformation of the signal defined in time domain $I_i(t)$ in frequency domain $I_w(f)$, to determine the frequency with greatest energy density, $f_1$, which corresponds to the supply main frequency of the motor.

    Two pieces of data are obtained in this first stage: firstly the real spectrum showing the function defined by the value $I_i(t)$ of the current in the time domain through the associated function $I_w(f)$ which is none other than the same function as expressed in the frequency domain after applying preferably the Fourier transform; and, analysing this function $I_w(f)$, secondly, we obtain $f_1$, the motor supply main frequency. Other modes of transformation to the frequency domain such as those based on wavelets, or DFT ("Discrete Fourier Transform") are equally valid.

- **Second stage II** comprises of the establishment of frequencies $f_{min}$ and $f_{max}$ which set an interval wherein it is possible to locate the harmonic caused by eccentricity $f_{ecc}$; that is, $f_{ecc} \in [f_{min}, f_{max}]$. Given that $f_{ecc}$ is an unknown quantity, the method defines a window wherein the only harmonic present is $f_{ecc}$.

- **Lastly, a third stage III** which in turn is made up of the following sub-stages:

    a) the frequency value of the only harmonic present is determined in the signal $I_w(f)$ at the interval $[f_{min}, f_{max}]$, that is, the value of $f_{ecc}$,
    b) the value for the rotation speed $f_{rm}$ of the motor is obtained using the equation $f_{rm}=f_1-f_{ecc}$.

Once this point is reached, the equation connecting the real rotation speed $f_{rm}$ and the harmonic associated with the eccentricity is totally determined thanks to the location of $f_{ecc}$ in the window.

Particular embodiments of methods of parameter assessment giving rise to different ways of using the method of the invention can be found in dependent claims 2 to 6 and are considered included in this description by reference.

A second aspect of the invention is a device according to claim 7 that, using the assessment of speed according to any of the examples for use of the invention, allows measurement of the real rotation speed and, by extension the efficiency. This device does not require modifications to the motor nor to the mechanical devices moved by the motor, rather simply the reading of the current in the motor's wiring.

This sole requirement means that the device can, for example, be installed in the switchboard occupying a minimum of space. If it is situated in one of the power supplay mains of the motor wiring, it can have a visualisation screen on which values such as the real speed or the motor efficiency can be seen, as well as other derived values that can be calculated according to the first.

This device for determining the rotation speed of an electric motor rotor comprises of at least:

- means for reading the intensity signal of the power mains,
- means for transforming the time domain signal to the frequency domain,
- a calculation unit,
- means for output of the numeric speed value.

The means for reading the intensity signal can be integrated in the same casing as the device so that the device will allow the power line to pass through.

The means for transforming the signal from the time domain to the frequency domain, in the preferred example, will operate digitally, necessitating an analogue-digital converter to carry out the transform on a discreet set of values.

In the invention's preferred embodiment, the transformation will take place using the Fourier transform. For the discretized case, there will be a finite space for functions of the Fourier base, giving rise to a finite work spectrum.

The Fourier truncated space allows for working on vectors of values both in the time domain and the frequency domain, efficiently interrelated through Fast Fourier Transform (FFT).

These operations will preferably be undertaken by the calculation unit. Different ways of employing the invention lead to different ways of distributing the computational load. It is possible that the transforms that allow temporal functions to be expressed in the frequency domain are carried out in devices dedicated to this task, meaning that the calculation unit would be wholly dedicated to the application of the different steps of the method; for example, the calculation of maximums or the assessment of expressions. Particular embodiments can be found in dependent claims 8-13, being considered as included in this description by reference.

The outlet means for the calculated values can supply results by way of a datum line so they can be handled from a central unit. Alternatively, they can be shown as a numeric value on a simple visualisation screen.

The device may not use a programmable unit, although it will use an integrated calculation unit. It is equally possible that any of the components, such as the analogue-digital converter, the calculation unit that calculates the signal in the frequency domain, or the unit that determines the speed are formed by devices using wired logic; that is, these devices only perform logical operations for which they have been specifically designed.

This is made possible through the use of FPGA (Field Programmable Gate Array) technologies, made up of an array of configurable or ASIC gates; that is, creating an Application-specific Integrated Circuit, meaning any integrated circuit made to measure for a specific use, instead of being used for general purposes.

The product made up of the program permitting the application of the method to the device when a programmable unit is used is also considered part of the invention, as set forth in claims 14 and 15, which are considered as included in this description by reference.

## DESCRIPTION OF THE DRAWINGS

This description is accompanied by a set of plans. These are illustrative of the preferred embodiment of the invention but are in no way restrictive.

Figure 1 shows a diagram of an embodiment of the invention wherein are shown the basic elements of the device for determining the real speed and real efficiency of an asynchronous electric motor.

Figure 2 shows a diagram of an embodiment of the invention wherein are shown the components of the example device represented in the diagram of the figure above.

## DETAILED EXPLANATION OF THE INVENTION

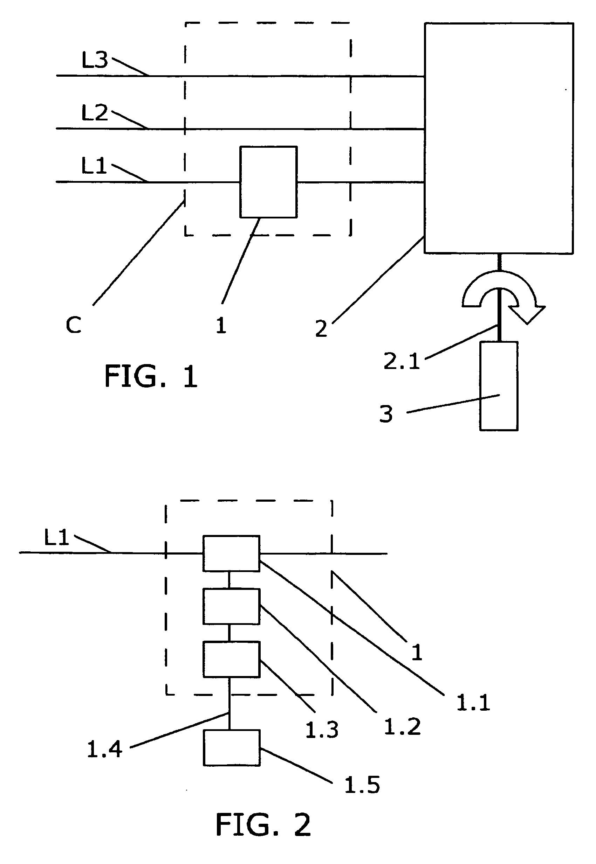

Figure 1 shows a diagram of an example of embodiment of the invention. This diagram shows an asynchronous electric motor (2) powered with a three-phase line (L) composed of three conductor mains ($L_1$, $L_2$, $L_3$).

The motor (2) is electrically powered. Part of the energy is used to apply a mechanical work through its axis (2.1) to a load (3). The relationship between the mechanical energy produced and the electrical energy supplied is that which defines the real efficiency of the motor $\eta_{rm}$ under the operating conditions determined by the curve $T$-$\omega$.

The device (1) of the invention only requires a reading of the current $I_l$ at one of the mains ($L_1$) of the wiring. This reading can be carried out outside the motor casing (2), for example at the switchboard (C).

The device (1) in this example is equipped with a current meter (1.1) which generates the function $I_l(t)$, the analogue function corresponding the signal with the intensity value according to time.

This analogue signal is transformed into a sampled signal using an analogue-digital converter (1.2).

The sampled signal is operable using numeric calculation algorithms. In particular, the calculation unit (1.3), in this embodiment, applies the Fast Fourier Transform (FFT) to obtain $I_w(f)$, the value corresponding to the current in the frequency domain.

This same calculation unit is able to execute a program that performs the following tasks:

- reading of a vector of values corresponding to a digital sample of the intensity signal,
- application of the transform to the frequency domain according to its Fourier truncated series.
- calculation of the frequency of the power supply $f_1$ analysing the harmonic associated with the maximum energy density,
- calculation of the values $f_{min}$, $f_{max}$
- assessment of the maximum of the transform function at the interval [$f_{min}$, $f_{max}$], value associated with the variable $f_{ecc}$,
- calculation of the real rotation speed of the rotor using the formula

$$f_{rm}=f_1-f_{ecc}.$$

In particular, the program uses the following input values obtained from the specifications plate information known for the motor:

- Number of pole pairs $p$,
- Nominal mechanical speed $\omega_n$ of the motor,
- Nominal efficiency $\eta_n$,
- Power factor cos θ,

- Nominal mechanical power $P_n$,
- Linearity constant $K_m$ which relates the supply voltage $U_l$ to the mains frequency $f_1$ according to $U_l=K_m f_1$,

The computer program calculates the frequencies $f_{min}$ and $f_{max}$ which establish the interval at which the harmonic is calculable due to the eccentricity $f_{ecc}$ using the following stages:

a) calculation of the synchronous speed of the motor $\omega_s$ according to the number of pole pairs $p$ of the motor and the mains frequency $f_1$

$$\omega_s = \frac{2\pi f_1}{p}$$

b) calculation of the supply voltage of the motor, $U_l$, according to the following equation

$$U_l = K_m \cdot f_1$$

c) estimation of the speed $\hat{\omega}_{rm}$ as the value which specifies $\hat{\omega}_{rm} = \min\{(\omega_s-\omega_1),(\omega_s-\omega_2)\}$ with $\omega_1$, $\omega_2$ being the real roots of the second degree equation

$$\eta_n\sqrt{3}U_l I_l \cos(\theta) = \left[ \frac{\frac{P_n}{\omega_n}}{\omega_s - \omega_n}\hat{\omega}_{rm} + \frac{\frac{P_n}{\omega_n}}{\omega_s - \omega_n}\hat{\omega}_s \right]\hat{\omega}_{rm}$$

d) estimation of slip $\hat{s}$ using

$$\hat{s} = \left(\omega_s - \hat{\omega}_{rm}\right)/\omega_s$$

e) estimation of the eccentricity frequency $\hat{f}_{ecc}$ using the equation

$$\hat{f}_{ecc} = f_1\left[1-\left(\frac{1-\hat{s}}{p}\right)\right]$$

f) determination of the value of $f_{min}$, as

$$f_{min} = \hat{f}_{ecc} - d_1\hat{f}_{ecc}$$

and the value of $f_{max}$ as

$$f_{max} = \hat{f}_{ecc} + d_2\hat{f}_{ecc}$$

where $d_1$ and $d_2$ are pre-established parameters which determine the width of the search interval [fmin, fmax] of the real value $f_{ecc}$.

In addition to being able to perform these tasks using a program executable from the calculation unit, the same can also be achieved using a wired logic device or a combination of a program and wired logic.

The estimated values are values that allow definition of the window wherein the real value of the harmonic $f_{ecc}$ is found. Therefore, these estimations do not lead to final values that are also estimated, rather they are part of the intermediate stages of the calculation. The final value of the harmonic associated to the eccentricity, $f_{ecc}$, is measured over the value of the intensity in the frequency domain, the estimations are purely a tool which allows definition of the search window wherein the only harmonic present $f_{ecc}$ is located.

The values $d_1$ and $d_2$ are taken in the preferred example to have equal value. The example takes that $d_1=d_2=d=0,1$.

Once the real speed of the motor is known, in this case expressed in radians per second $\omega_{rm}$, it is possible to calculate the motor's real efficiency, $\eta_{rm}$ at each operating point on the motor using the second degree equation in $\omega_{rm}$:

$$\eta_{rm} = \frac{\left[ -\frac{\frac{P_n}{\omega_n}}{\omega_s - \omega_n} \omega_{rm} + \frac{\frac{P_n}{\omega_n}}{\omega_s - \omega_n} \omega_s \right] \omega_{rm}}{\sqrt{3} U_l I_l \cos(\theta)}$$

where it is found that $\sqrt{3} U_l I_l \cos\theta = 3 U_f I_f \cos\theta$.

The second degree equation can give two positive real roots: $\omega_1$, $\omega_2$. Physically speaking, only the one closest to the synchronous speed, $\omega_s$[rad/s] is correct.

The choice of the correct root can be calculated as the speed fulfilling the minimum criterion, that is:

$$\omega_{rm} = \min\{(\omega_s - \omega_1), (\omega_s - \omega_2)\}$$

## Claims

1. Method for determining the rotation speed of rotors in asynchronous electric induction motors, $f_{rm}$, wherein the following data of the motor are known:

   • Number of poles $p$,
   • Nominal mechanical speed $\omega_n$ of the motor,
   • Nominal efficiency $\eta_n$,
   • Power factor cos θ,
   • Nominal mechanical power $P_n$,
   • Linearity constant $K_m$ which relates the supply voltage $U_l$ to the mains frequency $f_1$ according to $U_l=K_m f_1$,

   comprising the following set of stages:

   • **first stage I** which in turn comprises the following sub-stages:

      a) the measurement of intensity $I_l=I_l(t)$ of any of the wiring phases of the coil of the motor's stator,
      b) the transformation of the signal defined in time domain $I_l(t)$ in frequency domain $I_w(t)$, to determine the frequency with greatest energy density, $f_1$, which corresponds to the supply main frequency of the motor,

   • second stage II comprises of the establishment of frequencies $f_{min}$ and $f_{max}$ which set an interval wherein it is possible to locate the harmonic caused by eccentricity $f_{ecc}$; that is, $f_{ecc} \in [f_{min}, f_{max}]$, is calculated in turn, using the following sub-stages:

      a) calculation of the synchronous speed of the motor $\omega_s$ according to the number of pole pairs p of the motor and the supply main frequency $f_1$. by means of the formula

$$\omega_s = \frac{2\pi f_1}{p}$$

b) calculation of the supply voltage of the motor, $U_l$, according to the following equation

$$U_l = K_m \cdot f_1$$

c) estimation of the speed $\hat{\omega}_{rm}$ as the value which specifies $\hat{\omega}_{rm} = \min\{(\omega_s - \omega_1),(\omega_s - \omega_2)\}$ with $\omega_1$, $\omega_2$ being the real roots of the second degree equation

$$\eta_n \sqrt{3} U_l I_l \cos(\theta) = \left[ \frac{\frac{P_n}{\omega_n}}{\omega_s - \omega_n} \hat{\omega}_{rm} + \frac{\frac{P_n}{\omega_n}}{\omega_s - \omega_n} \hat{\omega}_s \right] \hat{\omega}_{rm}$$

d) estimation of slip $\hat{s}$ using

$$\hat{s} = (\omega_s - \hat{\omega}_{rm})/\omega_s$$

e) estimation of the eccentricity frequency $\hat{f}_{ecc}$ using the equation

$$\hat{f}_{ecc} = f_1 \left[ 1 - \left( \frac{1-\hat{s}}{p} \right) \right]$$

f) determination of the value of $f_{min}$ as

$$f_{\min} = \hat{f}_{ecc} - d_1 \hat{f}_{ecc}$$

and the value of $f_{max}$ as

$$f_{\max} = \hat{f}_{ecc} + d_2 \hat{f}_{ecc}$$

where $d_1$ and $d_2$ are pre-established parameters which determine the width of the search interval *[fmin, fmax]* of the real value $f_{ecc}$.
• **third stage III**, which in turn comprises of the following sub-stages:

b) the frequency value of the only harmonic present is determined in the signal $I_w(f)$ at the interval $[f_{min}, f_{max}]$, that is, the value of $f_{ecc}$,
c) the value for the rotation speed $f_{rm}$ of the rotor is obtained using the equation $f_{rm}=f_1-f_{ecc}$.

2. Method according to claim 1, **characterised in that** $d_1$ and $d_2$ are equal, that is, $d_1=d_2=d$.

3. Method according to claim 2, **characterised in that** $d=0$'1.

4. Method according to any of the previous claims, **characterised in that** any of the speeds calculated or measured in the different expressions being taken in Hertz $f_1$[Hz], in radians per second $\omega_s$[rad/s] or in revolutions per minute $n_s$[rev/min] provided the following dependent relationships are taken into account

$$\omega_s = \frac{2\pi f_1}{p} \; ; \; n_s = \frac{60 f_1}{p} \; .$$

5. Method according to any of the previous claims, **characterised in that** the real efficiency of the motor, $\eta_{rm}$, is determined for each operating point of the motor as:

$$\eta_{rm} = \frac{\left[ -\dfrac{\dfrac{P_n}{\omega_n}}{\omega_s - \omega_n} \omega_{rm} + \dfrac{\dfrac{P_n}{\omega_n}}{\omega_s - \omega_n} \omega_s \right] \omega_{rm}}{\sqrt{3} U_l I_l \cos(\theta)}$$

6. Method according to claim 1, **characterised in that** the assessment of the intensity signal $I_w(f)$ in the frequency domain is carried out numerically, preferably using the Fast Fourier Transform.

7. Device for determining the rotation speed of the rotor of an electric motor which comprises:

   • means for reading the intensity signal $I_j=I_j(t)$ for the motor wiring,
   • means for transforming the time domain signal $I_j=I_j(t)$ to the frequency domain $I_w(t)$,
   • a calculation unit for calculating 3 steps:

   **first step I** which determines the frequency of the $I_w(t)$ signal with greatest energy density $f_1$, which corresponds to the supply main frequency of the motor,
   **second step II** that comprises of the establishment of frequencies $f_{min}$ and $f_{max}$ which set an interval wherein it is possible to locate the harmonic caused by eccentricity $f_{ecc}$ of the motor; that is, $f_{ecc} \in [f_{min}, f_{max}]$, is calculated in turn, using the following sub-steps:

   • calculation of the synchronous speed of the motor $\omega_s$ according to the number of pole pairs $p$ of the motor and the supply main frequency $f_1$, by means of the formula

$$\omega_s = \frac{2\pi f_1}{p}$$

   • calculation of the supply voltage of the motor, $U_l$, according to the following equation

$$U_l = K_m \cdot f_1$$

   • estimation of the speed $\hat{\omega}_{rm}$ as the value which specifies $\hat{\omega}_{rm}=\min\{(\omega_s-\omega_1),(\omega_s-\omega_2)\}$ with $\omega_1$, $\omega_2$ being the real roots of the second degree equation

$$\eta_n\sqrt{3}U_l I_l \cos(\theta) = \left[\frac{\dfrac{P_n}{\omega_n}}{\omega_s - \omega_n}\hat{\omega}_{rm} + \frac{\dfrac{P_n}{\omega_n}}{\omega_s - \omega_n}\hat{\omega}_s\right]\hat{\omega}_{rm}$$

• estimation of slip $\hat{s}$ using

$$\hat{s} = (\omega_s - \hat{\omega}_{rm})/\omega_s$$

• estimation of the eccentricity frequency $\hat{f}_{ecc}$ using the equation

$$\hat{f}_{ecc} = f_1\left[1 - \left(\frac{1-\hat{s}}{p}\right)\right]$$

• determination of the value of $f_{min}$ as

$$f_{min} = \hat{f}_{ecc} - d_1\hat{f}_{ecc}$$

and the value of $f_{max}$ as

$$f_{max} = \hat{f}_{ecc} + d_2\hat{f}_{ecc}$$

where $d_1$ and $d_2$ are pre-established parameters which determine the width of the search interval $[f_{min}, f_{max}]$ of the real value $f_{ecc}$.
**third stage III**, which in turn comprises of the following sub-stages:

• the frequency value of the only harmonic present is determined in the signal $I_w(f)$ at the interval $[f_{min}, f_{max}]$, that is, the value of $f_{ecc}$,
• the value for the rotation speed $f_{rm}$ of the rotor is obtained using the equation $f_{rm}=f_1-f_{ecc}$.

• means for output of the numeric speed $f_{rm}$ value.

8. Device according to claim 7, **characterised in that** the means of transformation of the signal from the time domain to the frequency domain use an analogue-digital converter as well as a transform calculation unit.

9. Device according to claim 8, **characterised in that** the implementation of the transform is Fourier, based on wavelets or DFT.

10. Device according to claims 7 and 8, **characterised in that** the calculation unit is fitted with an entry for the intensity signal in the frequency domain and an output with the value representing the speed.

11. Device according to any of claims 7 to 10 **characterised in that** the calculation unit is programmable.

12. Device according to any of the claims 7 to 10 **characterised in that** any of the components of the analogue-digital, the calculation unit that calculates the signal in the frequency domain or the unit that determines the speed are made up of devices using wired logic.

**13.** Device according to claim 12, **characterised in that** the integration leads to an ASIC device.

**14.** Product consisting of a computer program for determining the rotation speed of the rotor of an electric motor, wherein the said product consisting of the computer program contains a resource which can be used as a computer that is equipped with means for reading an executable code for the:

• reading of a vector of values corresponding to a digitised sample of the intensity signal,
• application of the transform to the frequency domain according to a truncated Fourier series development.
• calculation of the supply main frequency $f_1$ using analysis of the harmonic associated with the maximum energy density,
• calculation of values $f_{min}$, $f_{max}$
• assessment of the maximum of the transform function at the interval [$f_{min}$, $f_{max}$]
• calculation of the speed using the formula $f_{rm}=f_1-f_{ecc}$[Hz] or their equivalents scaled appropriately according to claim 5.

**15.** The product consisting of a computer program according to claim 3, wherein the transform to the frequency domain is carried out using a Fast Fourier Transform algorithm, DFT or based on wavelets.

**Patentansprüche**

**1.** Methode zur Bestimmung der Rotationsgeschwindigkeit von Rotoren von asynchronen elektrischen Induktionsmotoren $f_{rm}$, bei der die folgenden Daten des Motors bekannt sind:

• Anzahl der Pole p,
• Mechanische Nenndrehzahl $\omega_n$ des Motors,
• Nennarbeitsleistung $\eta_n$,
• Leistungsfaktor $\cos\theta$
• Mechanische Nennleistung $P_n$,
• Linearitätskonstante $K_m$, welche die Netzspannung $U_l$ mit der Netzfrequenz $f_1$ entsprechend $U_1=K_mf_1$ in Verbindung bringt,

welche die folgende Reihe von Schritten umfasst:

• einen ersten Schritt I, der seinerseits die folgenden Unterschritte umfasst:

**a)** die Messung der Intensität $I_l = I,(t)$ jeder der Verdrahtungsphasen der Spule des Stators des Motors,
**b)** die Umwandlung des im Zeitbereichs $I,(t)$ definierten Signals in einen Frequenzbereich $I_w(t)$ zur Bestimmung der Frequenz mit der größten Energiedichte $f_1$, welche der Hauptversorgungsfrequenz des Motors entspricht,

• einen zweiten Schritt II, der aus der Festlegung der Frequenzen $f_{min}$ und $f_{max}$ besteht, welche ein Intervall bestimmen, in dem es möglich ist, die Harmonische zu lokalisieren, welche durch die Exzentrizität $f_{ecc}$ erzeugt wird; dass heißt, $f_{ecc} \in [f_{min}, f_{max}]$ wird seinerseits berechnet, indem die folgenden Unterschritte verwendet werden:

**a)** Berechnung der synchronen Drehzahl des Motors $\omega_s$ entsprechend der Anzahl von Polpaaren p des Motors und der Hauptversorgungsfrequenz $f_1$, mittels der Formel

$$\omega_s = \frac{2\pi f_1}{p}$$

**b)** Berechnung der Netzspannung des Motors $U_1$ nach der folgenden Gleichung

$$U_I = K_m \cdot f_1$$

**c)** Schätzung der Drehzahl $\overline{\omega}_{rm}$ als den Wert, der $\overline{\omega}_{rm} = (\min \{(\omega_s - \omega_1),(\omega_s- \omega_2)\}$ spezifiziert, wobei $\omega_1$, $\omega_2$ die reellen Wurzeln der Gleichung zweiten Grades

$$\eta_n \sqrt{3U_I I_I \cos(\theta)} = \left[ \frac{\dfrac{P_n}{\omega_n}}{\omega_s - \omega_n}\varpi_{rm} + \frac{\dfrac{P_n}{\omega_n}}{\omega_s - \omega_n}\varpi_s \right] \varpi_{rm}$$

sind
**d)** Schätzung der Abweichung unter Verwendung von

$$\hat{s} = (\omega_s - \varpi_{rm})|\omega_s$$

**e)** Schätzung der Exzentrizitätsfrequenz $\hat{f}_{ecc}$ unter Verwendung der Gleichung

$$\hat{f}_{ecc} = f_1 \left[ 1 - \left( \frac{1 - \hat{s}}{p} \right) \right]$$

**f)** Bestimmung des Werts von $f_{min}$ als

$$f_{min} = \hat{f}_{ecc} - d_1 \hat{f}_{ecc}$$

und des Werts $f_{max}$ als

$$f_{max} = \hat{f}_{ecc} + d_2 \hat{f}_{ecc}$$

wobei $d_1$ und $d_2$ im Voraus festgelegte Parameter sind, welche die Breite des Suchintervalls [$f_{min}$, $f_{max}$] des reellen Werts $f_{ecc}$ bestimmen.
• einen dritten Schritt III, der seinerseits aus den folgenden Unterschritten besteht:

b) der Frequenzwert der einzigen vorliegenden Harmonischen wird in dem Signal $I_w(f)$ beim Intervall [$f_{min}$, $f_{max}$] bestimmt, dass heißt der Wert von $f_{ecc}$.
c) der Wert der Rotationsgeschwindigkeit $f_m$ des Rotors wird erhalten, indem die Gleichung $f_{rm} = f_1$-$f_{ecc}$ verwendet wird.

2. Methode nach Anspruch 1, **dadurch gekennzeichnet, dass** $d_1$ und $d_2$ gleich sind, dass heißt $d_1 = d_2= d$.

3. Methode nach Anspruch 2, **dadurch gekennzeichnet, dass** d = 0'1 ist.

4. Methode nach irgendeinem der vorherigen Ansprüche, **dadurch gekennzeichnet, dass** jede der in den unterschiedlichen Ausdrücken berechneten oder gemessenen Drehzahlen in Hertz $f_1$(Hz), in Bogenmaßen pro Sekunde $\omega_s$[rad/s] oder in Umdrehungen pro Minute $n_s$[U/min] genommen werden, vorausgesetzt, die folgenden abhängigen

Verhältnisse werden berücksichtigt

$$\omega_s = \frac{2\pi f_1}{p} ; n_s = \frac{60 f_1}{p}$$

**5.** Methode nach irgendeinem der vorherigen Ansprüche, **dadurch gekennzeichnet, dass** die reelle Leistung des Motors $\eta_m$ für jeden Arbeitspunkt des Motors als

$$\eta_{rm} = \frac{\left[ -\frac{\frac{P_n}{\omega_n}}{\omega_s - \omega_n} \omega_{rm} + \frac{\frac{P_n}{\omega_n}}{\omega_s - \omega_n} \omega_s \right] \omega_{rm}}{\sqrt{3 U_1 I_1 \cos(\theta)}}$$

berechnet wird.

**6.** Methode nach Anspruch 1, **dadurch gekennzeichnet, dass** die Bewertung des Intensitätssignals $I_w(f)$ im Frequenzbereich numerisch durchgeführt wird, vorzugsweise unter der Verwendung der schnellen Fourier Transformation.

**7.** Vorrichtung zur Bestimmung der Rotationsgeschwindigkeit eines Rotors eines Elektromotors, die Folgendes umfasst:

- Mittel zur Ablesung des Intensitätssignals $I_l=I_l(t)$ für die Motorverdrahtung,
- Mittel zur Umwandlung des Zeitbereichssignals $I_l=I_l(t)$ in den Frequenzbereich $I_w(t)$
- Eine Berechungseinheit zur Berechnung von 3 Schritten:

einen ersten Schritt I, der die Frequenz des $I_w(t)$ Signals mit der größten Energiedichte $f_1$ bestimmt, welche der Hauptversorgungsfrequenz des Motors entspricht,
einen zweiten Schritt II, der aus der Festlegung der Frequenzen $f_{min}$ und $f_{max}$ besteht, welche ein Intervall bestimmen, in dem es möglich ist, die Harmonische zu lokalisieren, welche durch die Exzentrizität $f_{ecc}$ des Motors erzeugt wird; dass heißt, $f_{ecc} \in [f_{min}, f_{max}]$ wird seinerseits berechnet, indem die folgenden Unterschritte verwendet werden:

■ Berechnung der synchronen Drehzahl des Motors $\omega_s$ entsprechend der Anzahl von Polpaaren p des Motors und der Hauptversorgungsfrequenz $f_1$, mittels der Formel

$$\omega_s = \frac{2\pi f_1}{p}$$

■ Berechnung der Netzspannung des Motors $U_1$ nach der folgenden Gleichung

$$U_l = K_m \cdot f_1$$

■ Schätzung der Drehzahl $\overline{\omega}_{rm}$ als den Wert, der $\overline{\omega}_{rm} =(\min \{(\omega_s - \omega_1),(\omega_s-\omega_2)\}$ spezifiziert, wobei $\omega_1$, $\omega_2$ die reellen Wurzeln der Gleichung zweiten Grades

$$\eta_n \sqrt{3 U_I I_I \cos(\theta)} = \left[ \frac{\dfrac{P_n}{\omega_n}}{\omega_s - \omega_n} \varpi_{rm} + \frac{\dfrac{P_n}{\omega_n}}{\omega_s - \omega_n} \varpi_s \right] \varpi_{rm}$$

sind
■ Schätzung der Abweichung $\hat{s}$ unter Verwendung von

$$\hat{s} = (\omega_s - \varpi_{rm}) / \omega_s$$

■ Schätzung der Exzentrizitätsfrequenz $\hat{f}_{ecc}$ unter Verwendung der Gleichung

$$\hat{f}_{ecc} = f_1 \left[ 1 - \left( \frac{1 - \hat{s}}{p} \right) \right]$$

■ Bestimmung des Werts von $f_{min}$ als

$$f_{min} = \hat{f}_{ecc} - d_1 \hat{f}_{ecc}$$

und des Werts $f_{max}$ als

$$f_{max} = \hat{f}_{ecc} + d_2 \hat{f}_{ecc}$$

wobei $d_1$ und $d_2$ im Voraus festgelegte Parameter sind, welche die Breite des Suchintervalls $[f_{min}, f_{max}]$ des reellen Werts $f_{ecc}$ bestimmen.

einen dritten Schritt III, der seinerseits aus den folgenden Unterschritten besteht:
■ der Frequenzwert der einzigen vorliegenden Harmonischen wird in dem Signal $I_w(f)$ beim Intervall $[f_{min}, f_{max}]$ bestimmt, dass heißt der Wert von $f_{ecc}$.
■ der Wert der Rotationsgeschwindigkeit $f_m$ des Motors wird erhalten, indem die Gleichung $f_{rm} = f_1 - f_{ecc}$ verwendet wird.

• Mittel zur Ausgabe des numerischen Drehzahlwerts $f_{rm}$.

**8.** Vorrichtung nach Anspruch 7, **dadurch gekennzeichnet, dass** die Mittel zur Umwandlung des Signals von einem Zeitbereich in einen Frequenzbereich einen Analog-Digital-Wandler sowie eine Transformations-Berechnungseinheit verwenden.

**9.** Vorrichtung nach Anspruch 8, **dadurch gekennzeichnet, dass** die Durchführung der Transformation eine auf Wellen bzw. DFT basierende Fourier Transformation ist.

**10.** Vorrichtung nach Anspruch 7 und 8, **dadurch gekennzeichnet, dass** die Berechnungseinheit mit einem Eingang für das Intensitätssignal im Frequenzbereich und einem Ausgang mit dem Wert ausgestattet ist, der die Drehzahl anzeigt.

**11.** Vorrichtung nach irgendeinem der Ansprüche 7 bis 10, **dadurch gekennzeichnet, dass** die Berechnungseinheit programmierbar ist.

12. Vorrichtung nach irgendeinem der Ansprüche 7 bis 10, **dadurch gekennzeichnet, dass** jeder der Komponenten des Analog-Digital-Wandlers, der Berechnungseinheit zur Berechnung des Signals im Frequenzbereich oder der Einheit, welche die Drehzahl bestimmt, aus Vorrichtungen gebildet sind, die verdrahtete Logik verwenden.

13. Vorrichtung nach Anspruch 12, **dadurch gekennzeichnet, dass** die Integration zu einer ASIC-Vorrichtung führt.

14. Produkt, das aus einem Computerprogramm zur Bestimmung der Rotationsgeschwindigkeit des Rotors eines elektrischen Motors besteht, wobei das besagte Produkt, das aus dem Computerprogramm besteht, ein Mittel enthält, das als Computer verwendet werden kann, der mit Mitteln zur Ablesung eins ausführbaren Codes für Folgendes ausgestattet ist:

   • die Ablesung eines Vektors von Werten, die einer digitalisiertem Probe des Intensitätssignals entsprechen,
   • die Anwendung der Transformation des Frequenzbereichs entsprechend einer gestutzten Entwicklung einer Fourier-Reihe,
   • die Berechnung der Versorgungshauptfrequenz $f_1$ unter Verwendung von Analysen der Harmonischen, die mit der maximalen Energiedichte verknüpft ist,
   • die Berechnung der Werte $f_{min}$, $f_{max}$,
   • die Bewertung des Maximalwerts der Transformationsfunktion beim Intervall [$f_{min}$, $f_{max}$],
   • die Berechnung der Drehzahl unter Verwendung der Formel $f_{rm}=f_1-f_{ecc}$[Hz] bzw. deren Äquivalenten, die auf angemessene Weise entsprechend Anspruch 5 skaliert wurden.

15. Das Produkt, welches aus einem Computer nach Anspruch 3 besteht, wobei die Transformation in dem Frequenzbereich durchgeführt wird, indem ein Algorithmus einer schnellen Fourier-Transformation, oder einer auf DFT oder Wellen basierender Fourier Transformation verwendet wird.

**Revendications**

1. Méthode pour déterminer la vitesse de rotation des rotors dans les moteurs à induction électrique asynchrones, $f_{rm}$, dans laquelle les données suivantes du moteur sont connues :

   • Nombre de pôles p,
   • Vitesse mécanique nominale $\omega_n$ du moteur,
   • Rendement nominal $\eta_n$,
   • Cosinus du facteur de puissance θ,
   • Puissance mécanique nominale $P_n$,
   • Constante de linéarité $K_m$ qui associe la tension d'alimentation $U_1$ à la principale fréquence $f_1$, conformément à $U_1=K_{mf1}$,

   comprenant l'ensemble d'étapes suivant :

   • **première étape I** qui à son tour comprend les sous-étapes suivantes :

      a) la mesure de l'intensité $I_l=I_l(t)$ de n'importe laquelle des phases de câblage de la bobine du stator du moteur,
      b) la transformation du signal défini dans le domaine temporel $I_l(t)$ dans le domaine fréquentiel $I_w(t)$, pour déterminer la fréquence avec la plus grande densité d'énergie, $f_1$, qui correspond à la principale fréquence d'alimentation du moteur,

   • **la deuxième étape II** comprend l'établissement des fréquences $f_{min}$ et $f_{max}$ qui définissent un intervalle dans lequel il est possible de situer l'harmonique dû à l'excentricité $f_{ecc}$; autrement dit, $f_{ecc} \in [f_{min},f_{max}]$, est calculé à son tour, en utilisant les sous-étapes suivantes :

      a) calcul de la vitesse synchrone du moteur $\omega_s$ selon le nombre de paires de pôles p du moteur et la principale fréquence d'alimentation $f_1$, au moyen de la formule

$$\omega_s = \frac{2\pi f_1}{p}$$

b) calcul de la tension d'alimentation du moteur, $U_l$, selon l'équation suivante

$$U_l = K_m . f_l$$

c) estimation de la vitesse $\omega_{rm}$ comme étant la valeur qui spécifie $\omega_{rm}=\min\{(\omega_s-\omega_1), (\omega_s-\omega_2)\}$ avec $\omega_1$, $\omega_2$ étant les valeurs réelles de l'équation du second degré

$$\eta_n \sqrt{3 U_I I_I \cos(\theta)} = \left[ \frac{\frac{P_n}{\omega_n}}{\omega_s - \omega_n} \varpi_{rm} + \frac{\frac{P_n}{\omega_n}}{\omega_s - \omega_n} \varpi_s \right] \varpi_{rm}$$

d) estimation du décalage s en utilisant

$$\hat{s} = \left( \omega_s - \varpi_{rm} \right) | \omega_s$$

e) estimation de la fréquence de l'excentricité $\hat{f}_{ecc}$ en utilisant l'équation

$$\hat{f}_{ecc} = f_1 \left[ 1 - \left( \frac{1 - \hat{s}}{p} \right) \right]$$

f) détermination de la valeur de $f_{min}$ en tant que

$$f_{min} = \hat{f}_{ecc} - d_1 \hat{f}_{ecc}$$

et de la valeur de $f_{max}$ en tant que

$$f_{max} = \hat{f}_{ecc} + d_2 \hat{f}_{ecc}$$

où $d_1$ et $d_2$ sont des paramètres préétablis qui déterminent la largeur de l'intervalle de recherche $[f_{min}, f_{max}]$ de la valeur $f_{ecc}$ réelle.

• **troisième étape III**, qui à son tour comprend les sous-étapes suivantes :

b) la valeur de fréquence de l'unique harmonique présent est déterminée dans le signal $I_w(f)$ à l'intervalle $[f_{min}, f_{max}]$, autrement dit, la valeur de $f_{ecc}$,
c) la valeur pour la vitesse de rotation $f_{rm}$ du rotor est obtenue en utilisant l'équation $f_{rm}=f_1-f_{ecc}$.

2. Méthode selon la revendication 1, **caractérisée en ce que** $d_1$ et $d_2$ sont égaux, autrement dit, $d_1=d_2=d$.

**3.** Méthode selon la revendication 2, **caractérisée en ce que** d=0'1.

**4.** Méthode selon n'importe laquelle des revendications précédentes, **caractérisée en ce que** n'importe lesquelles des vitesses calculées ou mesurées dans les différentes expressions étant prises en Hertz $f_1$[Hz], en radians par seconde $\omega_2$[rad/s] ou en tours par minute $n_s$[tr/mn] sous réserve des relations de dépendance suivantes sont prises en compte

$$\omega_s = \frac{2\pi f_1}{p} ; n_s = \frac{60 f_1}{p}$$

**5.** Méthode selon n'importe laquelle des revendications précédentes, **caractérisée en ce que** le rendement réel du moteur, $\eta_{rm}$, est déterminé pour chaque point opérationnel du moteur comme :

$$\eta_{rm} = \frac{\left[ -\dfrac{\dfrac{P_n}{\omega_n}}{\omega_s - \omega_n} \omega_{rm} + \dfrac{\dfrac{P_n}{\omega_n}}{\omega_s - \omega_n} \omega_s \right] \omega_{rm}}{\sqrt{3 U_I I_I \cos(\theta)}}$$

**6.** Méthode selon la revendication 1, **caractérisée en ce que** l'évaluation du signal d'intensité $I_w$(f) dans le domaine fréquentiel est réalisée numériquement, de préférence en utilisant la transformation de Fourier rapide.

**7.** Dispositif pour déterminer la vitesse de rotation du rotor d'un moteur électrique qui comprend :

- des moyens pour lire le signal d'intensité $I_l=I_l$(t) pour le câblage du moteur,
- des moyens pour transformer le signal de domaine temporel $I_l=I_l$(t) en domaine fréquentiel $I_w$(t),
- une unité de calcul pour calculer 3 étapes :

**première étape I** qui détermine la fréquence du signal $I_w$(t) avec la plus grande densité d'énergie, $f_1$, qui correspond à la principale fréquence d'alimentation du moteur,
**deuxième étape II** qui comprend l'établissement des fréquences $f_{min}$ et $f_{max}$ qui définissent un intervalle dans lequel il est possible de situer l'harmonique dû à l'excentricité $f_{ecc}$ du moteur ; autrement dit, $f_{ecc} \in [f_{min}, f_{max}]$, est calculée à son tour, en utilisant les sous-étapes suivantes :

- calcul de la vitesse synchrone du moteur $\omega_s$ selon le nombre de paires de pôles p du moteur et la principale fréquence d'alimentation $f_1$, au moyen de la formule

$$\omega_s = \frac{2\pi f_1}{p}$$

- calcul de la tension d'alimentation du moteur, $U_l$, selon l'équation suivante

$$U_l = K_m . f_l$$

- estimation de la vitesse $\omega_{rm}$ comme étant la valeur qui spécifie $\omega_{rm} = \min\{(\omega_s - \omega_1), (\omega_s - \omega_2)\}$ avec $\omega_1$, $\omega_2$ étant les valeurs réelles de l'équation du second degré

$$\eta_n \sqrt{3 U_I I_I \cos(\theta)} = \left[ \frac{\dfrac{P_n}{\omega_n}}{\omega_s - \omega_n} \varpi_{rm} + \frac{\dfrac{P_n}{\omega_n}}{\omega_s - \omega_n} \varpi_s \right] \varpi_{rm}$$

• estimation du décalage s en utilisant

$$\hat{s} = \left( \omega_s - \varpi_{rm} \right) | \omega_s$$

• estimation de la fréquence de l'excentricité $\hat{f}_{ecc}$ en utilisant l'équation

$$\hat{f}_{ecc} = f_1 \left[ 1 - \left( \frac{1 - \hat{s}}{p} \right) \right]$$

• détermination de la valeur de $f_{min}$ en tant que

$$f_{min} = \hat{f}_{ecc} - d_1 \hat{f}_{ecc}$$

et de la valeur de $f_{max}$ en tant que

$$f_{max} = \hat{f}_{ecc} + d_2 \hat{f}_{ecc}$$

où $d_1$ et $d_2$ sont des paramètres préétablis qui déterminent la largeur de l'intervalle de recherche [$f_{min}$, $f_{max}$] de la valeur $f_{ecc}$ réelle.
**troisième étape III,** qui à son tour comprend les sous-étapes suivantes :

• la valeur de fréquence de l'unique harmonique présent est déterminée dans le signal $I_w(f)$ à l'intervalle [$f_{min}$, $f_{max}$], autrement dit, la valeur de $f_{ecc}$,
• la valeur pour la vitesse de rotation $f_{rm}$ du rotor est obtenue en utilisant l'équation $f_{rm}=f_1-f_{ecc}$.

des moyens pour la sortie de la valeur de vitesse $f_{rm}$ numérique.

**8.** Dispositif selon la revendication 7, **caractérisé en ce que** les moyens de transformation du signal du domaine temporel, en domaine fréquentiel utilisent un convertisseur analogique numérique ainsi qu'une unité de calcul de transformation.

**9.** Dispositif selon la revendication 8, **caractérisé en ce que** la mise en oeuvre de la transformation est Fourier, basée sur des ondelettes ou la conception en vue du test.

**10.** Dispositif selon les revendications 7 et 8, **caractérisé en ce que** l'unité de calcul est équipée d'une entrée pour le signal d'intensité dans le domaine fréquentiel et d'une sortie avec la valeur représentant la vitesse.

**11.** Dispositif selon n'importe laquelle des revendications 7 à 10, **caractérisé en ce que** l'unité de calcul est programmable.

**12.** Dispositif selon n'importe laquelle des revendications 7 à 10, **caractérisé en ce que** n'importe lequel des composants du convertisseur analogique numérique, de l'unité de calcul qui calcule le signal dans le domaine fréquentiel ou de l'unité qui détermine la vitesse sont constitués de dispositifs utilisant une logique câblée.

**13.** Dispositif selon la revendication 12, **caractérisé en ce que** l'intégration conduit à un dispositif ASIC (circuit intégré à application spécifique).

**14.** Produit constitué d'un programme d'ordinateur pour déterminer la vitesse de rotation du rotor d'un moteur électrique, dans lequel ledit produit constitué du programme d'ordinateur contient une ressource qui peut être utilisée comme un ordinateur qui est équipé de moyens pour lire un code exécutable pour :

• la lecture d'un vecteur de valeurs correspondant à un échantillon numérisé du signal d'intensité,
• l'application de la transformation au domaine fréquentiel selon un développement en série de Fourier tronqué.
• le calcul de la principale fréquence d'alimentation $f_1$ en utilisant l'analyse de l'harmonique associé à la densité d'énergie maximale,
• le calcul des valeurs $f_{min}$, $f_{max}$
• l'évaluation du maximum de la fonction de transformation à l'intervalle [$f_{min}$, $f_{max}$]
• le calcul de la vitesse en utilisant la formule $f_{rm}=f_1-f_{ecc}$[Hz] ou leur équivalents à l'échelle appropriée selon la revendication 5.

**15.** Le produit constitué d'un programme d'ordinateur selon la revendication 3, dans lequel la transformation en domaine fréquentiel est réalisée en utilisant un algorithme de transformation de Fourier rapide, de conception en vue du test ou basé sur des ondelettes.

L3

L2

L1

C

1

2

2.1

3

## FIG. 1

L1

1

1.1

1.2

1.3

1.4

1.5

## FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006131878 A

- US 5742522 A